# FASCICULE DE BREVET EUROPEEN

(11) **EP 2 919 412 B1**
(45) Date de publication et mention de la délivrance du brevet: **10.04.2019**
(21) Numéro de dépôt: 15158229.3
(22) Date de dépôt: 09.03.2015
(51) Int. Cl.: H04L 9/08, H04L 9/32

(54) **Procédé et système de chiffrement/déchiffrement de données à clé distante et vérification préalable de jeton**
Verfahren und System zum Chiffrieren/Dechiffrieren von Daten mit Remote-Schlüssel und vorheriger Überprüfung des Token
Method and system for encrypting/decrypting data with a remote key and prior token verification

(30) Priorité: 10.03.2014 FR 1451924
(43) Date de publication de la demande: 16.09.2015
(73) Titulaire: Commissariat à l'Énergie Atomique et aux Énergies Alternatives, 75015 Paris (FR)
(72) Inventeur: Pebay-Peyroula, Florian, 38250 Saint-Nizier-du-Moucherotte (FR)
(74) Mandataire: Brevalex

(56) Documents cités:
- WO-A1-00/62507
- US-A- 5 218 638
- US-A1- 2005 132 204
- US-A1- 2008 056 498
- US-A1- 2010 142 711
- BLAZE MATT ED - KOVALEV MIKHAIL M KOVALEVSIGMAIRRIX COM SIRRIX AG IM STADTWALD D3 2 66123 SAARBRÜCKEN GERMANY ET AL: "High-bandwidth encryption with low-bandwidth smartcards", 21 février 1996 (1996-02-21), LECTURE NOTES IN COMPUTER SCIENCE; [LECTURE NOTES IN COMPUTER SCIENCE], SPRINGER VERLAG, DE, PAGE(S) 33 - 40, XP047294340, ISSN: 0302-9743 ISBN: 978-3-319-13905-0 [extrait le 2005-06-02] * figures 1,2 *
- OPREA A ET AL: "Securing a Remote Terminal Application with a Mobile Trusted Device", COMPUTER SECURITY APPLICATIONS CONFERENCE, 2004. 20TH ANNUAL TUCSON, AZ, USA 06-10 DEC. 2004, PISCATAWAY, NJ, USA,IEEE, 6 décembre 2004 (2004-12-06), pages 438-447, XP010757430, DOI: 10.1109/CSAC.2004.33 ISBN: 978-0-7695-2252-4

## Description

### DOMAINE TECHNIQUE

Le domaine de l'invention est celui de la protection des données numériques. L'invention concerne plus précisément un procédé de chiffrement/déchiffrement de données sur un dispositif hôte au moyen d'une clé secrète conservée dans un dispositif sécurisé et non communiquée au dispositif hôte.

### ÉTAT DE LA TECHNIQUE ANTÉRIEURE

Les systèmes informatiques et électroniques ont recours de manière croissante à la cryptographie. Les quantités de données échangées augmentant de manière exponentielle, il s'avère par ailleurs nécessaire d'être capable de chiffrer des flux de données avec des débits croissants.

D'une manière générale, il existe deux familles de composants capables de réaliser les opérations de chiffrement et de déchiffrement, à savoir les microcontrôleurs classiques (MCU pour « *MicroController Unit»*) et les microcontrôleurs sécurisés (SE pour « Secure Element »).

Les microcontrôleurs MCU disposent la plupart du temps de suffisamment de ressources pour chiffrer rapidement une quantité d'information importante, soit en exécutant des algorithmes de chiffrement par du logiciel embarqué, soit à l'aide d'accélérateurs matériels qui permettent de réaliser les opérations cryptographiques sans surcharger l'unité arithmétique et logique du coeur d'un microcontrôleur MCU. Cependant, les microcontrôleurs MCU ne disposent pas de « coffre-fort » leur permettant de stocker des secrets de manière robuste. De fait, ils ne permettent pas à eux seuls d'assurer un haut niveau de sécurité.

A l'inverse, les microcontrôleurs SE permettent par construction, tant d'un point de vue logiciel que matériel, de stocker des secrets avec un haut degré de confiance. Ces microcontrôleurs SE sont embarqués dans différents produits de la vie courante tels que les cartes à puces (carte SIM, carte bancaire, badges d'accès, etc.) ou les ordinateurs portables (puce cryptographique TPM « Trusted Platform Module»). Mais si les microcontrôleurs SE sont capables de réaliser des calculs cryptographiques sur des quantités de données restreintes (pour des authentifications, du contrôle d'intégrité par exemple), ils ne sont en revanche pas capables de réaliser des opérations de chiffrement ou de déchiffrement sur des flux de données à haut débit.

Différents protocoles dits à « chiffrement à clé distante » (ou protocoles RKEP pour « Remotely Keyed Encryption Protocol ») ont été proposés pour allier les avantages respectifs des microcontrôleurs MCU et SE et réaliser ainsi le chiffrement et le déchiffrement à haut débit avec un haut niveau de sécurité. Selon ces protocoles, un dispositif hôte de type MCU reçoit le texte clair à chiffrer et déroule le protocole RKEP en lien avec un dispositif sécurisé de type SE afin de chiffrer le texte clair sans que la clé secrète ne sorte du dispositif sécurisé de type SE.

La demande de brevet US 2009/0006865 A1 présente un exemple de protocole RKEP dont le principe général consiste à hacher le message à chiffrer P dans le dispositif hôte puis à transmettre le condensat Z résultant du hachage au dispositif sécurisé. Celui-ci chiffre alors le condensat Z avec la clé secrète K pour générer une clé de message K_{P}, puis transmet la clé de message K_{P} au dispositif hôte qui réalise alors le chiffrement du message P avec la clé de message K_{P}.

Ce protocole a pour principal inconvénient d'autoriser une attaque en texte clair choisi selon laquelle l'attaquant dispose de textes qu'il soumet au dispositif sécurisé en tant que condensats Z et dont il en récupère les versions chiffrées K_{P}.

Ce protocole a également pour inconvénient d'exposer les clés de message K_{P} sur la liaison de communication entre le dispositif hôte et le dispositif sécurisé, ces clés étant dès lors sujettes à interception.

Enfin, ce protocole a également pour inconvénient le fait que les calculs de condensats doivent être réalisés pour chaque message par le dispositif hôte. Or ces calculs sont coûteux en cycles et en mémoire.

On connaît par ailleurs du document US 2008/056498 A1 un système de protection d'un contenu multimédia selon lequel un dispositif électronique procède au chiffrement au moyen d'une clé secrète conservée dans une carte à puce. Ce système met en oeuvre les étapes faisant l'objet du préambule des revendications 1 et 13.

### EXPOSÉ DE L'INVENTION

L'invention a pour objectif un protocole RKEP à niveau de sécurité amélioré et complexité de calcul réduite. Elle propose pour ce faire un procédé de chiffrement d'un message par un dispositif hôte conforme à l'objet de la revendication 1.

L'invention porte également sur un procédé de déchiffrement d'un message par un dispositif hôte conforme à l'objet de la revendication 13.

L'invention s'étend par ailleurs à un système de chiffrement et de déchiffrement de messages, ledit système comprenant un module hôte et un module de sécurité configurés pour la mise en oeuvre de ces procédés.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un diagramme illustrant une opération de chiffrement selon un premier mode de réalisation de l'invention ;
- la figure 2 est un diagramme illustrant une opération de déchiffrement selon le premier mode de réalisation de l'invention
- la figure 3 est un diagramme illustrant une opération de chiffrement selon un second mode de réalisation de l'invention
- la figure 4 est un diagramme illustrant une opération de déchiffrement selon le second mode de réalisation de l'invention ;
- les figures 5 et 6 illustrent des exemples d'application de l'invention.

### EXPOSÉ DÉTAILLÉ DE MODES DE RÉALISATION PARTICULIERS

L'invention porte sur un procédé de chiffrement/déchiffrement de données sur un dispositif hôte au moyen d'une clé secrète conservée dans un dispositif sécurisé distant et non communiquée au dispositif hôte. Elle s'étend également à un système de chiffrement/déchiffrement de données formé d'un dispositif hôte et d'un dispositif sécurisé configurés pour la mise en oeuvre du procédé.

Le dispositif hôte comprend un microcontrôleur de type MCU, tandis que le dispositif sécurisé comprend un microcontrôleur de type SE. ils sont désignés par ces références sur les figures. Le dispositif hôte MCU et le dispositif sécurisé SE sont reliés entre eux par l'intermédiaire d'une liaison de communication.

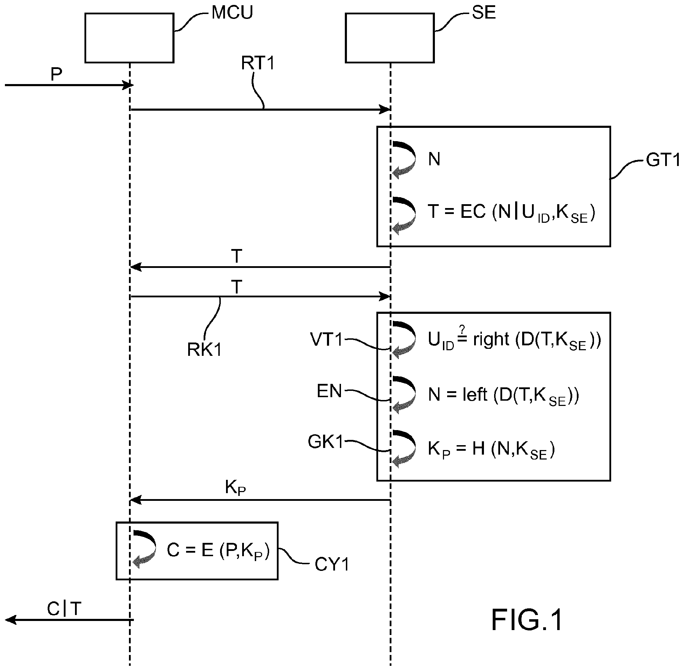

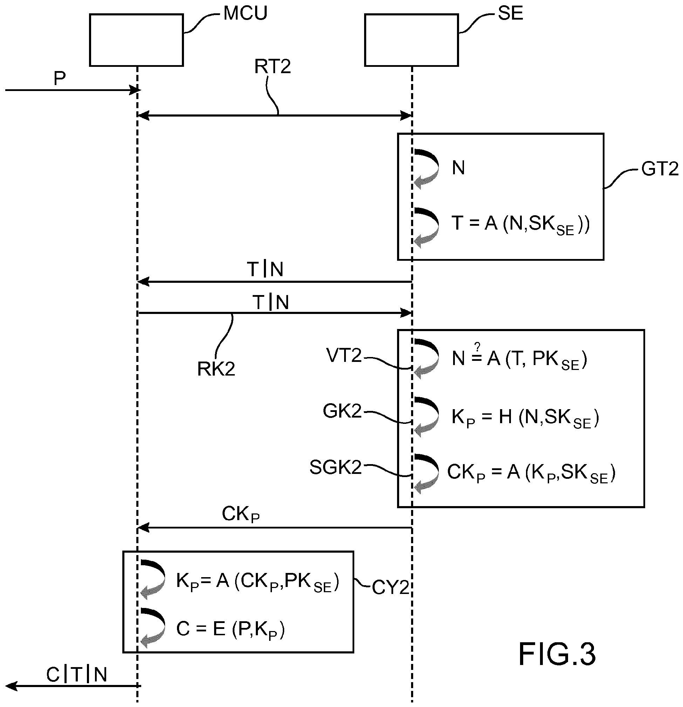

En référence aux figures 1 et 3 illustrant chacune un procédé de chiffrement selon un mode de réalisation possible de l'invention, le chiffrement met en oeuvre, suite à la réception par le dispositif hôte MCU du message à chiffrer P, une étape de requête RK1, RK2 par le dispositif hôte MCU d'une clé de message K_{P} auprès du dispositif sécurisé SE, et une étape de génération GK1, GK2 par le dispositif sécurisé SE de la clé de message K_{P} à l'aide d'une clé secrète K_{SE}, SK_{SE} stockée dans le dispositif sécurisé SE et non communiquée au dispositif hôte MCU. Le dispositif hôte MCU procède ensuite au chiffrement CY1, CY2 du message P à l'aide de la clé de message K_{P} pour fournir un message chiffré C concaténé à d'autres informations pour permettre son déchiffrement comme cela sera détaillé par la suite.

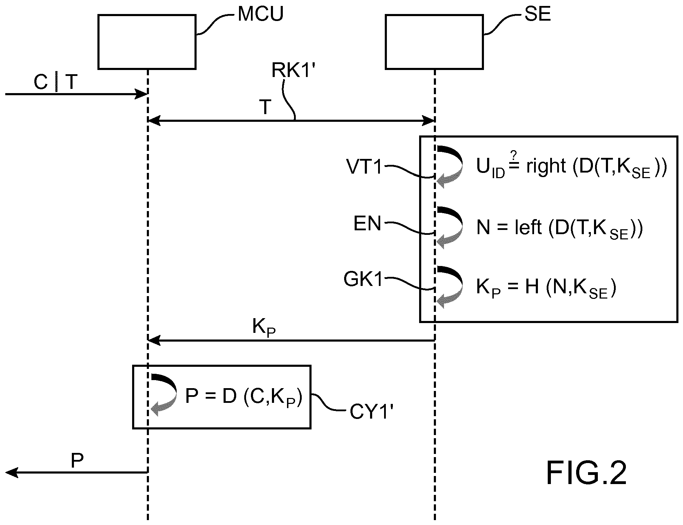

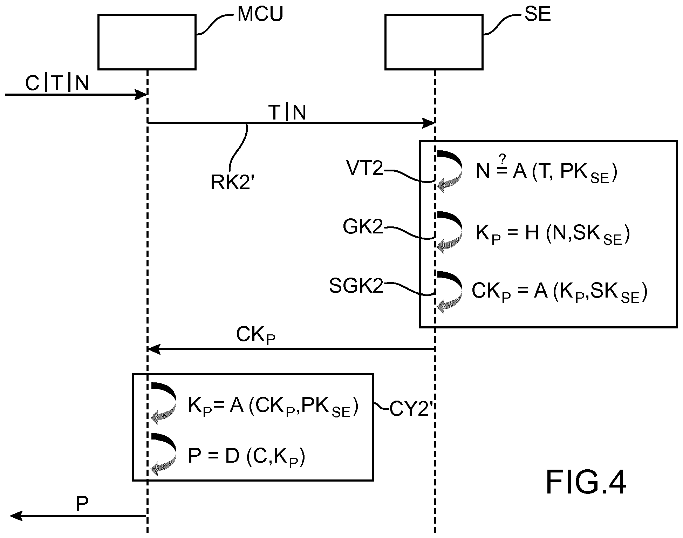

De manière similaire, et en référence aux figures 2 et 4 illustrant chacune un procédé de déchiffrement selon un mode de réalisation possible de l'invention, le déchiffrement met en oeuvre, suite à la réception par le dispositif hôte MCU du message à déchiffrer C, une étape de requête RK1', RK2' par le dispositif hôte MCU d'une clé de message K_{P} auprès du dispositif sécurisé SE, et une étape de génération GK1, GK2 par le dispositif sécurisé SE de la clé de message K_{P} à l'aide de la clé secrète K_{SE}, SK_{SE}. Le dispositif hôte MCU procède ensuite au déchiffrement CY1', CY2' du message C à l'aide de la clé de message K_{P} pour fournir le message déchiffré P.

Dans ce cadre, l'invention propose que le chiffrement comprenne les étapes préalables de requête RT1, RT2 par le dispositif hôte MCU d'un jeton T auprès du dispositif sécurisé SE, de génération GT1, GT2 du jeton par le dispositif sécurisé SE, et de transmission du jeton T ainsi généré au dispositif hôte MCU. Par ailleurs, l'étape de requête RK1, RK2 par le dispositif hôte MCU de la clé de message comprend la transmission du jeton T au dispositif sécurisé SE, et l'étape de génération GK1, GK2 par le dispositif sécurisé SE de la clé de chiffrement du message est précédée d'une étape VT1, VT2 de vérification de la légitimité du jeton T. Bien entendu, si le jeton s'avère non légitime, la clé de message requise n'est pas générée et n'est donc pas communiquée au dispositif hôte MCU.

S'agissant du déchiffrement selon l'invention, le message C à déchiffrer est accompagné d'un jeton T et l'étape de génération GK1, GK2 par le dispositif sécurisé de la clé de message est précédée d'une étape VT1, VT2 de vérification de la légitimité du jeton, soit par le dispositif hôte lui-même, soit par le module de sécurité auquel cas l'étape de requête RK1', RK2' par le dispositif hôte MCU d'une clé de message comprend la transmission du jeton T.

Ce procédé de chiffrement/déchiffrement présente l'avantage de ce que le dispositif hôte MCU procède uniquement au chiffrement du message P ou au déchiffrement du message C, et ne voit pas ses performances dégradées du fait de calculs de valeurs dérivées de ces messages mettant par exemple en oeuvre un hachage. Les opérations de chiffrement et de déchiffrement sont ainsi réalisées de manière plus efficace.

Par ailleurs, ce procédé de chiffrement/déchiffrement protège contre l'attaque par texte clair choisi. Un attaquant ne peut en effet pas itérer une grande quantité de jetons pour découvrir de l'information sur la manière de générer une clé de message K_{P}. Les jetons doivent en effet être légitimes pour rendre possible l'obtention d'une clé de message. La sécurité est ainsi améliorée.

La génération du jeton comprend le chiffrement d'un nombre aléatoire au moyen de la clé secrète. Le jeton est ainsi le chiffré d'un nombre aléatoire, issu d'un calcul cryptographique réalisé dans le dispositif sécurisé SE. Des exemples de réalisation de génération d'un jeton et de vérification de sa légitimité sont les suivants.

Dans un premier exemple illustré sur les figures 1 et 2, le nombre aléatoire N est concaténé avec un identifiant unique U_{ID} du dispositif de sécurité avant chiffrement au moyen de la clé secrète. La génération du jeton GT1 comprend ainsi le tirage d'un nombre aléatoire N, la concaténation du nombre aléatoire N avec l'identifiant unique U_{ID} du dispositif de sécurité et le chiffrement de la concaténation N|U_{ID} au moyen d'un algorithme de chiffrement E et de la clé secrète K_{SE} conservée par le dispositif sécurisé SE. Le jeton ainsi généré est transmis au module hôte MCU.

Suite à une requête RK1, RK1' d'obtention de la clé de message via laquelle un jeton est transmis, le module de sécurité SE procède à la vérification VT1 de la légitimité du jeton transmis. Il procède pour cela au déchiffrement du jeton pour obtenir le nombre N et l'identifiant U_{ID}, et procède à la comparaison de cet identifiant résultant du déchiffrement du jeton avec son véritable identifiant. Dans cet exemple, on utilise un algorithme de chiffrement symétrique E, et on note D l'algorithme de déchiffrement tel que si B=E(A, K_{SE}), alors A=D(B, K_{SE}).

Dans un second exemple illustré sur les figures 3 et 4, la génération du jeton GT2 comprend le tirage d'un nombre aléatoire N, et le chiffrement du nombre aléatoire au moyen d'un algorithme de chiffrement A et de la clé secrète SK_{SE} conservée par le dispositif sécurisé SE. Le jeton T concaténé au nombre aléatoire (T|N) est transmis au module hôte.

Suite à une requête RK2, RK2' d'obtention de la clé de message via laquelle un jeton concaténé à un nombre est transmis, le module de sécurité SE procède à la vérification VT2 de la légitimité du jeton transmis. Il procède pour cela au déchiffrement du jeton transmis par le module hôte pour obtenir le nombre N, et procède à la comparaison de ce nombre résultant du déchiffrement du jeton avec le nombre concaténé au jeton transmis par le module hôte. Dans cet exemple, on utilise un algorithme de chiffrement asymétrique A, le chiffrement du jeton s'effectuant au moyen d'une clé secrète privée SK_{SE} et son déchiffrement s'effectuant au moyen d'une clé publique PK_{SE} de telle sorte que le module de sécurité SE réalise une signature du nombre N lors de la génération du jeton.

Un premier mode de réalisation de l'invention, illustré par les figures 1 et 2, repose sur l'utilisation d'un algorithme de chiffrement symétrique. Suite à la vérification VT1 du jeton T, le module de sécurité procède à la génération GK1 de la clé de message K_{P} en réalisant, à l'aide de la clé secrète K_{SE}, un hachage H du nombre N extrait lors d'une opération EN du déchiffrement du jeton. La clé de message K_{P} est ensuite transmise au module hôte qui procède alors au chiffrement (figure 1) du message P au moyen de l'algorithme de chiffrement E et de la clé de message pour obtenir le message chiffré C, ou au déchiffrement (figure 2) du message C au moyen de l'algorithme de déchiffrement D et de la clé de message K_{P} pour obtenir le message déchiffré P. On notera qu'à l'issue du chiffrement, le message chiffré C est concaténé au jeton T, de sorte que le module hôte dispose d'un jeton légitime lors du déchiffrement.

Dans un second mode de réalisation de l'invention illustré par les figures 3 et 4, suite à la vérification VT2 du jeton T, le module de sécurité procède à la génération GK2 de la clé de message K_{P} en réalisant, à l'aide de la clé secrète privée SK_{SE}, un hachage H du nombre N.

La clé de message peut ensuite être transmise au module hôte qui procède alors au chiffrement du message P au moyen de l'algorithme de chiffrement E et de la clé de message pour obtenir le message chiffré C, ou au déchiffrement du message C au moyen de l'algorithme de déchiffrement D et de la clé de message K_{P} pour obtenir le message déchiffré P. On notera qu'à l'issue du chiffrement, le message chiffré C est concaténé au jeton T et au nombre N, de sorte que le module hôte dispose d'un couple jeton/nombre légitime lors du déchiffrement.

Dans une variante de réalisation représentée sur les figures 3 et 4, la clé de message K_{P} n'est pas transmise en clair du module sécurisé SE au module hôte MCU. La clé de message K_{P} est ici chiffrée lors d'une opération SGK2 au moyen de l'algorithme asymétrique A et de la clé secrète privée SK_{SE} avant d'être transmise au module hôte. Celui-ci procède alors, avant le chiffrement ou déchiffrement du message, au déchiffrement de la clé de message chiffrée CK_{P} au moyen de l'algorithme asymétrique A et de la clé publique PK_{SE}.

En évitant de transmettre la clé de message K_{P} en clair, la sécurité se trouve renforcée. Bien entendu, la clé publique PK_{SE} doit rester secrète puisqu'un attaquant la possédant pourrait déchiffrer les clés de message chiffrées CK_{P} et retrouver les clés de message K_{P}.

Cette variante présente en outre l'avantage de ce que le module hôte peut lui-même procéder à la vérification d'un jeton à l'aide de la clé publique PK_{SE}, ce qui s'avère notamment utile en tant qu'étape préalable au déchiffrement d'un message C qui est accompagné d'un jeton.

On relèvera que dans les deux modes de réalisation décrits ci-dessus, le module hôte utilise un algorithme symétrique pour chiffrer/déchiffrer les données. L'invention n'est pas limitée à ce choix, mais s'étend également à l'utilisation d'un algorithme asymétrique, même si cela n'est pas privilégié du fait des contraintes que cela entraîne sur le débit de ces opérations.

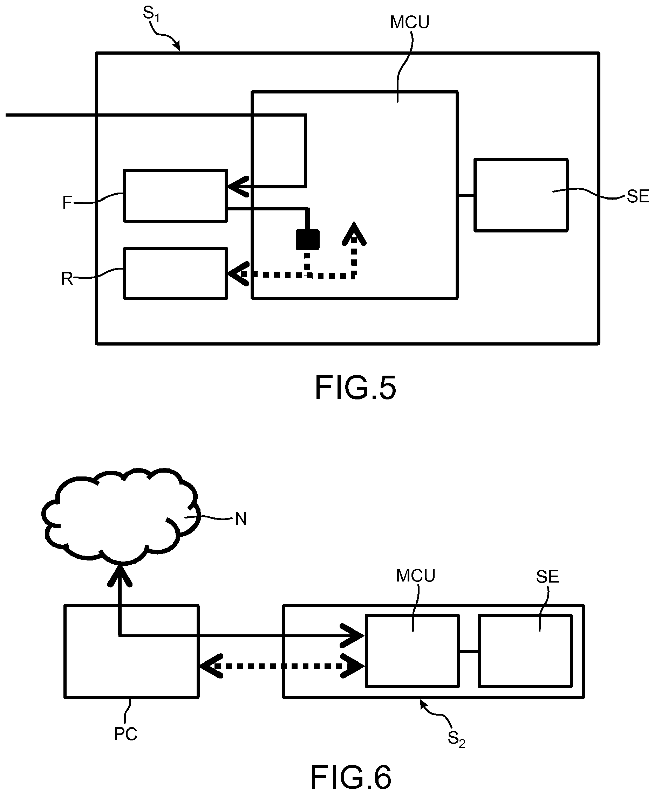

L'invention n'est pas limitée aux procédés de chiffrement et de déchiffrement tels que précédemment décrits, mais s'étend également à des systèmes de chiffrement et de déchiffrement formés d'un module hôte et d'un module de sécurité configurés pour la mise en oeuvre de ces procédés. Des exemples de tels systèmes sont donnés sur les figures 5 et 6 qui illustrent des applications possibles de l'invention.

La figure 5 illustre ainsi la mise à jour sécurisée d'un micro-logiciel. Le micro-logiciel mis à jour et chiffré est téléchargé et écrit dans une mémoire F du système S1, par exemple une mémoire flash. Au démarrage du microcontrôleur MCU, le micro-logiciel est déchiffré selon le procédé précédemment décrit puis copié dans une deuxième mémoire R, par exemple une mémoire RAM, afin d'être exécuté. Sur cette figure 5, les traits pleins représentent les flux de données chiffrées, et les traits pointillés représentent les flux de données déchiffrées.

La figure 6 illustre quant à elle le chiffrement de données pour les services de type stockage à distance dans un nuage informatique N. Le système S2 selon l'invention prend ici la forme d'un dispositif USB au travers duquel un utilisateur d'un ordinateur PC accède à ses données distantes. Les données sont échangées (trait plein) avec le nuage N de manière chiffrée, le microcontrôleur MCU traitant les données en temps réel selon le procédé précédemment décrit. Le microcontrôleur MCU se charge plus précisément de chiffrer des données qui lui sont transmises (trait pointillé) par l'ordinateur PC avant que celles-ci ne soient stockées dans le nuage. Et il se charge de déchiffrer des données en provenance du nuage avant de les transmettre (trait pointillé) à l'ordinateur PC.

L'invention trouve ainsi application dans les systèmes embarqués dans lesquels sont intégrés les microcontrôleurs MCU et SE. L'invention n'est toutefois pas limitée à cette application, et couvre également tout type de liaison entre le MCU et le SE, notamment une liaison distante.

## Revendications

1. Procédé de chiffrement d'un message (P) par un dispositif hôte (MCU), comprenant les étapes de :
- requête (RK1, RK2) par le dispositif hôte (MCU) d'une clé de message (K_{P}) auprès d'un dispositif sécurisé (SE),
- génération (GK1, GK2) par le dispositif sécurisé (SE) de la clé de message (K_{P}) à l'aide d'une clé secrète (K_{SE}, SK_{SE}) stockée dans le dispositif sécurisé et non communiquée au dispositif hôte, **caractérisé en ce qu'**il comporte les étapes préalables de :
- requête (RT1, RT2) par le dispositif hôte d'un jeton (T) auprès du dispositif sécurisé,
- génération (GT1, GT2) du jeton (T) par le dispositif sécurisé, la génération du jeton comprenant le chiffrement d'un nombre aléatoire au moyen de la clé secrète, et
- transmission du jeton au dispositif hôte,
**en ce que** l'étape de requête (RK1, RK2) par le dispositif hôte d'une clé de message comprend la transmission du jeton, et
**en ce que** l'étape de génération (GK1, GK2) par le dispositif sécurisé de la clé de message est précédée d'une étape de vérification (VT1, VT2) de la légitimité du jeton comprenant le déchiffrement du jeton.

2. Procédé selon la revendication 1, dans lequel le nombre aléatoire (N) est concaténé avec un identifiant unique (U_{ID}) du dispositif sécurisé avant chiffrement au moyen de la clé secrète.

3. Procédé selon la revendication 2, dans lequel l'étape de vérification (VT1) de la légitimité du jeton comprenant le déchiffrement du jeton au moyen de la clé secrète et la comparaison de l'identifiant unique du dispositif sécurisé avec le résultat du déchiffrement du jeton.

4. Procédé selon la revendication 3, comprenant en outre entre l'étape de vérification (VT1) de la légitimité du jeton et l'étape de génération (GK1) de la clé de message, une étape d'extraction (EN) du nombre aléatoire depuis le résultat du déchiffrement du jeton.

5. Procédé selon la revendication 1, dans lequel le nombre aléatoire est transmis au dispositif hôte avec le jeton, l'étape de requête (RK2) par le dispositif hôte d'une clé de message comprend la transmission du jeton et du nombre aléatoire, et l'étape de vérification (VT2) de la légitimité du jeton comprenant le déchiffrement du jeton et la comparaison du nombre aléatoire transmis avec le résultat du déchiffrement du jeton.

6. Procédé selon l'une des revendications 1 à 5, dans lequel la clé de message (K_{P}) est générée par hachage (H) du nombre aléatoire (N) au moyen de la clé secrète (K_{SE}, SK_{SE}).

7. Procédé selon la revendication 6, comprenant en outre un chiffrement (SGK2) de la clé de message (K_{P}) au moyen de la clé secrète (SK_{SE}).

8. Procédé selon la revendication 7, comprenant en outre le déchiffrement par le dispositif hôte de la clé de message chiffrée.

9. Procédé selon l'une des revendications 1 à 8, dans lequel la clé secrète (SK_{SE}) est une clé privée d'un algorithme de chiffrement asymétrique (A).

10. Procédé selon la revendication 9 prise en combinaison avec la revendication 5, dans lequel le déchiffrement du jeton est réalisé au moyen d'une clé publique (PK_{SE}) de l'algorithme de chiffrement asymétrique.

11. Procédé selon la revendication 9 prise en combinaison avec la revendication 8, dans lequel le déchiffrement de la clé de message chiffré est réalisé au moyen d'une clé publique (PK_{SE}) de l'algorithme de chiffrement asymétrique (A).

12. Système de chiffrement d'un message comprenant un dispositif hôte (MCU) et un dispositif sécurisé (SE), lesdits dispositifs étant configurés pour mettre en oeuvre les étapes du procédé selon l'une quelconque des revendications 1 à 11.

13. Procédé de déchiffrement d'un message (C) par un dispositif hôte (MCU), comprenant les étapes de :
- requête (RK1', RK2') par le dispositif hôte d'une clé de message (K_{P}) auprès d'un dispositif sécurisé (SE),
- génération (GK1, GK2) par le dispositif sécurisé de la clé de message (K_{P}) à l'aide d'une clé secrète (K_{SE}, SK_{SE}) stockée dans le dispositif sécurisé et non communiquée au dispositif hôte, **caractérisé en ce que** le message (C) est accompagné d'un jeton généré par le chiffrement d'un nombre aléatoire au moyen de la clé secrète, et **en ce que** l'étape de génération (GK1, GK2) par le dispositif sécurisé de la clé de déchiffrement du message est précédée d'une étape de vérification (VT1, VT2) de la légitimité du jeton comprenant le déchiffrement du jeton.

14. Système de déchiffrement d'un message comprenant un dispositif hôte (MCU) et un dispositif sécurisé (SE), lesdits dispositifs étant configurés pour mettre en oeuvre les étapes du procédé selon la revendication 13.

## Patentansprüche

1. Verfahren zum Verschlüsseln einer Nachricht (P) durch eine Host-Vorrichtung (MCU), umfassend die Schritte:
- Anfragen (RK1, RK2) eines Nachrichtenschlüssels (K_{P}) durch die Host-Vorrichtung (MCU) bei einer gesicherten Vorrichtung (SE),
- Erzeugen (GK1, GK2) des Nachrichtenschlüssels (K_{P}) durch die gesicherte Vorrichtung (SE) mit Hilfe eines geheimen Schlüssels (K_{SE}, SK_{SE}), welcher in der gesicherten Vorrichtung gespeichert ist und nicht an die Host-Vorrichtung kommuniziert wird,
**dadurch gekennzeichnet, dass** es die vorangehenden Schritte umfasst:
- Anfragen (RT1, RT2) eines Tokens (T) durch die Host-Vorrichtung bei der gesicherten Vorrichtung,
- Erzeugen (GT1, GT2) des Tokens (T) durch die gesicherte Vorrichtung, wobei die Erzeugung des Tokens das Verschlüsseln einer Zufallszahl mittels des geheimen Schlüssels umfasst, und
- Übertragen des Tokens an die Host-Vorrichtung,
dass der Schritt des Anfragens (RK1, RK2) eines Nachrichtenschlüssels durch die Host-Vorrichtung das Übertragen des Tokens umfasst, und
dass dem Schritt des Erzeugens des Nachrichtenschlüssels durch die gesicherte Vorrichtung ein Schritt einer Verifikation (VT1, VT2) der Legitimation des Tokens vorangeht, welcher das Entschlüsseln des Tokens umfasst.

2. Verfahren nach Anspruch 1, wobei die Zufallszahl (N) mit einer eindeutigen Kennung (U_{ID}) der gesicherten Vorrichtung vor dem Verschlüsseln mittels des geheimen Schlüssels verknüpft wird.

3. Verfahren nach Anspruch 2, wobei der Schritt des Verifizierens (VT1) der Legitimation des Tokens das Entschlüsseln des Tokens mittels des geheimen Schlüssels und das Vergleichen der eindeutigen Kennung der gesicherten Vorrichtung mit dem Ergebnis des Entschlüsselns des Tokens umfasst.

4. Verfahren nach Anspruch 3, ferner umfassend zwischen dem Schritt des Verifizierens (VT1) der Legitimation des Tokens und dem Schritt des Erzeugens (GK1) des Nachrichtenschlüssels, einen Schritt eines Extrahierens (EN) der Zufallszahl aus dem Ergebnis der Entschlüsselung des Tokens.

5. Verfahren nach Anspruch 1, wobei die Zufallszahl mit dem Token zu der Host-Vorrichtung übertragen wird, wobei der Schritt des Anfragens (RK2) eines Nachrichtenschlüssels durch die Host-Vorrichtung das Übertragen des Tokens und der Zufallszahl umfasst, und der Schritt des Verifizierens (VT2) der Legitimation des Tokens das Entschlüsseln des Tokens und das Vergleichen der übertragenen Zufallszahl mit dem Ergebnis der Entschlüsselung des Tokens umfasst.

6. Verfahren nach einem der Schritte 1 bis 5, wobei der Nachrichtenschlüssel (K_{P}) durch Hashen (H) der Zufallszahl (N) mittels des geheimen Schlüssels (K_{SE}, SK_{SE}) erzeugt wird.

7. Verfahren nach Anspruch 6, ferner umfassend eine Verschlüsselung (SGK2) des Nachrichtenschlüssels (K_{P}) mittels des geheimen Schlüssels (SK_{SE}).

8. Verfahren nach Anspruch 7, ferner umfassend das Entschlüsseln des Schlüssels der verschlüsselten Nachricht durch die Host-Vorrichtung.

9. Verfahren nach einem der Ansprüche 1 bis 8, wobei der geheime Schlüssel (SK_{SE}) ein privater Schlüssel eines asymmetrischen Verschlüsselungsalgorithmus (A) ist.

10. Verfahren nach Anspruch 9, genommen in Kombination mit Anspruch 5, wobei das Entschlüsseln des Tokens mittels eines öffentlichen Schlüssels (PK_{SE}) des asymmetrischen Verschlüsselungsalgorithmus durchgeführt wird.

11. Verfahren nach Anspruch 9, genommen in Kombination mit Anspruch 8, wobei das Entschlüsseln des Nachrichtenschlüssels mittels eines öffentlichen Schlüssels (PK_{SE}) des asymmetrischen Verschlüsselungsalgorithmus (A) durchgeführt wird.

12. System zum Verschlüsseln einer Nachricht, umfassend eine Host-Vorrichtung (MCU) und eine gesicherte Vorrichtung (SE), wobei die Vorrichtungen dazu eingerichtet sind, die Schritte des Verfahrens nach einem der Ansprüche 1 bis 11 auszuführen.

13. Verfahren zum Entschlüsseln einer Nachricht (C) durch eine Host-Vorrichtung (MCU), umfassend die Schritte:
- Anfragen (RK1', RK2') eines Nachrichtenschlüssels (K_{P}) durch die Host-Vorrichtung von einer gesicherten Vorrichtung (SE),
- Erzeugen (GK1, GK2) des Nachrichtenschlüssels (K_{P}) durch die gesicherte Vorrichtung mit Hilfe eines geheimen Schlüssels (K_{SE}, SK_{SE}), welcher in der gesicherten Vorrichtung gespeichert ist und nicht an die Host-Vorrichtung kommuniziert wird,
**dadurch gekennzeichnet, dass** die Nachricht (C) von einem Token begleitet wird, welches durch die Verschlüsselung einer Zufallszahl mittels des geheimen Schlüssels erzeugt wird, und dass dem Schritt des Erzeugens (GK1, GK2) des Schlüssels zum Entschlüsseln der Nachricht durch die gesicherte Vorrichtung ein Schritt eines Verifizierens (VT1, VT2) der Legitimation des Tokens vorhergeht, welcher das Entschlüsseln des Tokens umfasst.

14. System zum Entschlüsseln einer Nachricht, umfassend eine Host-Vorrichtung (MCU) und eine gesicherte Vorrichtung (SE), wobei die Vorrichtungen dazu eingerichtet sind, die Schritte des Verfahrens nach Anspruch 13 auszuführen.

## Claims

1. A method for encrypting a message (P) by a host device (MCU), comprising the steps of:
- requesting (RK1, RK2), by the host device (MCU), a message key (Kₚ) from a secure device (SE),
- generating (GK1, GK2), by the secure device (SE), the message key (Kₚ) using a secret key (K_{SE}, SK_{SE}) stored in the secure device and which is not communicated to the host device,
**characterised in that** it includes the prior steps of:
- requesting (RT1, RT2), by the host device, a token (T) from the secure device,
- generating (GT1, GT2) the token (T) by the secure device, wherein generating the token comprises encrypting a random number by means of the secret key, and
- transmitting the token to the host device,
**in that** the step (RK1, RK2) of requesting, by the host device, a message key comprises transmitting the token, and
**in that** the step (GK1, GK2) of generating, by the secure device, the message key is preceded by a step (VT1, VT2) of checking the legitimacy of the token.

2. The method according to claim 1, wherein the random number (N) is concatenated with a unique identifier (U_{ID}) of the secure device before encrypting by means of the secret key.

3. The method according to claim 2, wherein the step (VT1) of checking the legitimacy of the token comprises decrypting the token by means of the secret key and comparing the unique identifier of the secure device to the result of the decryption of the token.

4. The method according to claim 3, further comprising, between the step (VT1) of checking the legitimacy of the token and the step (GK1) of generating the message key, a step (EN) of retrieving the random number from the result of decryption of the token.

5. The method according to claim 1, wherein the random number is transmitted to the host device with the token, the step (RK2) of requesting, by the host device, a message key comprises transmitting the token and the random number, and the step (VT2) of checking the legitimacy of the token comprises decrypting the token and comparing the random number transmitted to the result of the decryption of the token.

6. The method according to one of claims 1 to 5, wherein the message key (K_{P}) is generated by hashing (H) the random number (N) by means of the secret key (K_{SE}, SK_{SE}).

7. The method according to claim 6, further comprising encrypting (SGK2) the message key (K_{P}) by means of the secret key (SK_{SE}).

8. The method according to claim 7, further comprising decrypting, by the host device, the encrypted message key.

9. The method according to one of claims 1 to 8, wherein the secret key (SK_{SE}) is a private key of an asymmetrical encryption algorithm (A).

10. The method according to claim 9 taken in combination with claim 5, wherein the decryption of the token is made by means of a public key (PK_{SE}) of the asymmetrical encryption algorithm.

11. The method according to claim 9 taken in combination with claim 8, wherein the decryption of the encrypted message key is made by means of a public key (PK_{SE}) of the asymmetrical encryption algorithm (A).

12. A system for encrypting a message comprising a host device (MCU) and a secure device (SE), said devices being configured to implement the steps of the method according to any of claims 1 to 11.

13. A method for decrypting a message (C) by a host device (MCU), comprising the steps of:
- requesting (RK1', RK2'), by the host device (MCU), a message key (Kₚ) from a secure device (SE),
- generating (GK1, GK2) by the secure device (SE) the message key (Kₚ) using a secret key (K_{SE}, SK_{SE}) stored in the secure device and which is not communicated to the host device,
**characterised in that** the message (C) is accompanied by a token generated by encrypting a random number by means of the secret key, and **in that** the step (GK1, GK2) of generating, by the secure device, the message decryption key is preceded by a step (VT1, VT2) of checking the legitimacy of the token.

14. A system for decrypting a message comprising a host device (MCU) and a secure device (SE), said devices being configured to implement the steps of the method according to claim 13.
